# EUROPÄISCHE PATENTANMELDUNG

(11) **EP 1 256 484 A1**
(43) Veröffentlichungstag der Anmeldung: **13.11.2002**
(21) Anmeldenummer: 02010562.3
(22) Anmeldetag: 10.05.2002
(51) Int. Cl.: B60N 2/46

(54) **Fahrzeugtür mit Armauflage**

(30) Priorität: 11.05.2001 DE 20107992 U
(71) Anmelder: Seeber AG & Co., 68165 Mannheim (DE)
(72) Erfinder: Roth, Adalbert, 76596 Forbach 3 (DE)
(74) Vertreter: Lasch, Hartmut Dipl.-Ing.

(57) **Zusammenfassung**

Eine Fahrzeugtür weist eine Tragkonstruktion auf, die auf der dem Fahrzeuginnenraum zugewandten Seite zumindest ein Verkleidungsteil mit einer zumindest in der Höhenlage längs einer Führung verstellbaren Armauflage trägt. Dabei ist innerhalb der Fahrzeugtür ein Antrieb vorgesehen, dessen Antriebsbewegung mittels einer Übertragungsvorrichtung, dieses Verkleidungsteil an einer Öffnung durchdringt, als Verstellbewegung auf die Armauflage übertragen werden kann, wobei die Öffnung in jeder Stellung der Armauflage innenseitig überdeckt ist.

## Beschreibung

Die Erfindung betrifft eine Fahrzeugtür mit einer Tragkonstruktion, die auf der dem Fahrzeuginnenraum zugewandten Seite zumindest ein Verkleidungsteil mit einer zumindest in der Höhenlage längs einer Führung verstellbaren Armauflage trägt.

Bei der Konstruktion von Kraftfahrzeugen besteht die Notwendigkeit, den Fahrzeugaufbau einerseits mit der notwendigen Stabilität auszubilden und andererseits zumindest in dem Fahrzeuginnenraum eine ästhetisch ansprechende Ausgestaltung vorzusehen, die dem Benutzer darüber hinaus ein möglichst großes Maß an Bequemlichkeit bietet. Bei einer Fahrzeugtür wird dies in der Regel dadurch erreicht, daß die im Inneren der Fahrzeugtür liegende Tragkonstruktion, die üblicherweise stählerne Bleche und Träger umfaßt, auf der dem Fahrzeuginnenraum zugewandten Seite mit einem Verkleidungsteil überdeckt ist, das mit einem Stoff- oder Lederbezug oder auch mit einem anderen Dekormaterial versehen sein kann.

Es ist seit langem bekannt, in das Verkleidungsteil eine sich im wesentlichen in Längsrichtung des Fahrzeuges erstreckende Armauflage zu integrieren, auf der ein in dem Fahrzeug sitzender Benutzer seinen Arm ablegen kann. Aus Gründen des Komforts kann die Armauflage gepolstert sein. Es hat sich jedoch gezeigt, daß die Bequemlichkeit der Armauflage für den Benutzer wesentlichen von deren Anordnung relativ zu dem Benutzer abhängig ist. Dabei spielt nicht nur die Gesamt-Körpergröße des Benutzer eine wesentliche Rolle, sondern es ist auch entscheidend, welche Position die Schulter des Benutzers in dessen Sitzstellung einnimmt und wie lang insbesondere der Oberarm des Benutzers ist, damit der Benutzer seinen Unterarm unverkrampft auf der Armauflage ablegen kann. Die Hersteller von Kraftfahrzeugen sind deshalb bemüht, eine Anordnung der Armauflage zu finden, die von möglichst vielen Benutzern als bequem und angenehm empfunden wird. Für viele Benutzer ist jedoch die Armauflage zu hoch oder zu tief angeordnet, wodurch das Wohlempfinden nachteilig beeinflußt ist.

Um dem Benutzer die Möglichkeit einer individuellen Anpassung der Position der Armauflage zu geben, ist es beispielsweise aus der DE 40 02 242 A1 bekannt, die Armauflage nicht einstückig in das Verkleidungsteil zu integrieren, sondern sie als unabhängiges Bauteil auszubilden und so zu lagern, daß sie relativ zu dem Verkleidungsteil und somit der Fahrzeugtür zumindest in vertikaler Richtung, d.h. in ihrer Höhenlage, von einem Benutzer längs einer Führung verstellt und an seine körperliche Gegebenheiten angepaßt werden kann. Auf diese Weise läßt sich für jeden Benutzer eine Stellung der Armauflage finden, die es ihm erlaubt, seinen Arm in bequemer, unverkrampfter Haltung auf der Armauflage abzulegen. Die Armauflage greift dabei mit Führungsstäben in Aufnahmen der Türverkleidung in teleskopartig verschieblicher Weise ein und kann in verschiedenen Positionen mittels Sperrbolzen arretiert werden. Nachteilig dabei ist, daß die Verstellung der Armauflage relativ mühsam ist und daß die Führungen vom Fahrzeuginnenraum aus sichtbar sind, wodurch der ästhetische Eindruck der Tür nachteilig beeinflußt ist.

Der Erfindung liegt die Aufgabe zugrunde, eine Fahrzeugtür der genannten Art mit einer Armauflage zu schaffen, die in einfacher Weise verstellbar ist und keine optische Beeinträchtigung des Fahrzeuginnenraum mit sich bringt.

Diese Aufgabe wird erfindungsgemäß bei einer Fahrzeugtür der genannten Art durch die kennzeichnenden Merkmale des Anspruchs 1 gelöst.

Bei der erfindungsgemäßen Armauflage ist vorgesehen, daß innerhalb der Fahrzeugtür ein Antrieb und insbesondere ein motorischer Antrieb vorgesehen ist, dessen Antriebsbewegung mittels einer Übertragungsvorrichtung, die das Verkleidungsteil an einer Öffnung durchdringt, als Verstellbewegung auf die Armauflage übertragen werden kann, wobei die Öffnung in jeder Stellung der Armauflage überdeckt ist. Die Übertragungsvorrichtung dient nicht nur der Übertragung der Verstellbewegung, sondern hält die Armauflage auch in der eingestellten Position und leitet auf die Armauflage einwirkende Kräfte in die Tragkonstruktion der Fahrzeugtür ab. Um eine sichere Lagerung der Armauflage vorzusehen, sollte die Übertragungsvorrichtung in zumindest zwei in Längsrichtung der Armauflage beabstandeten Bereiche an dieser angreifen, so daß die Armauflage kippsicher gehalten ist und die auftretenden Momente sicher aufnehmen und ableiten kann. Durch die Verlagerung des Antriebes und vorzugsweise auch der Führung der verstellbaren Armauflage in die Fahrzeugtür, d.h. vom Fahrzeuginnenraum ausgesehen hinter das Verkleidungsteil, ist erreicht, daß diese Bauteile vom Fahrzeuginnenraum aus nicht sichtbar sind und lediglich die Öffnung des Verkleidungsteils den ästhetischen Eindruck des Fahrzeuginnenraums beeinträchtigen könnte. Dies ist jedoch erfindungsgemäß dadurch vermieden, daß die Öffnung permanent abgedeckt ist, was insbesondere durch die Armauflage selbst erfolgt, wobei die Öffnung der dem Fahrzeuginnenraum abgewandten Rückseite der Armauflage angeordnet ist.

Zusätzlich zu der vertikalen, vorzugsweise stufenlosen höhenmäßigen Verstellung der Armauflage kann vorgesehen sein, diese auch in horizontaler Richtung, d.h. in Längsrichtung des Fahrzeuges und somit der Fahrzeugtür zu verstellen, wodurch der Benutzer eine Anpassung der Position der Armauflage an die Position des Fahrzeugsitzes vornehmen kann, der üblicherweise in Bodenschienen in Längsrichtung des Fahrzeuges verstellbar ist.

Aus Sicherheitsgründen und zur besseren Bauraumausnutzung sowie zur Erzielung einer kompakten Bauweise kann es notwendig sein, den Antrieb und insbesondere den elektrischen Antriebsmotor in gewisser Entfernung von der Armlehne und dem bei manchen Fahrzeugtypen dort sitzenden Seitenairbag anzuordnen. In Weiterbildung der Erfindung ist deshalb vorgesehen, daß der Antrieb in einem der Armauflage weitestmöglich entfernten Abschnitt der Fahrzeugtür angeordnet ist, wobei die Übertragung der Antriebsbewegung beispielsweise durch eine flexible Welle, die zumindest abschnittsweise die Übertragungsvorrichtung bildet, erfolgen kann, wodurch eine weitgehende konstruktive Freiheit bezüglich der Anordnung des Antriebsmotors gegeben ist.

Für die Übertragung der Antriebsbewegung von dem Antrieb über die Übertragungsvorrichtung auf die Armauflage sind verschiedene konstruktive Ausgestaltungen denkbar. Bei einer ersten möglichen Ausgestaltung ist vorgesehen, in einem Schubteil eine als Langloch ausgebildete Kulisse vorzusehen, in die ein mit der Übertragungsvorrichtung verbundener Stift eingreift. Wenn das Schubteil verschoben wird, läuft der Stift entlang der Kulisse und erfährt dabei entsprechend deren Verlauf eine Aufwärts- oder Abwärtsbewegung, die zu einer entsprechenden Bewegung der Armauflage führt.

Die Übertragungsvorrichtung kann auch alternativ einen Transmissionsriemen aufweisen, mit dem die Drehbewegung des Antriebs an zumindest zwei Spindeltriebe übertragen wird, die auf diese Weise synchronisiert angetrieben werden. Jeder Spindeltrieb umfaßt ein drehbares Antriebsteil, das mit einem mit der Armauflage verbundenen Abtriebsteil derart in Eingriff steht, daß eine Drehung des Antriebsteils zu einer linearen Verstellung des Abtriebsteils führt. Da die Spindeltriebe synchronisiert angetrieben sind, können die beiden Abtriebsteile, die jeweils mit der Armauflage verbunden sind, gleichmäßig verstellt werden, so daß sich eine translatorische Anhebung oder Absenkung der Armauflage ergibt.

Eine besonders einfache Ausgestaltung der Übertragungsvorrichtung läßt sich erreichen, wenn eine von dem Antrieb getriebene Welle an ihrem äußeren Ende einen Exzenter insbesondere in Form einer außermittig gelagerten kreiszylindrischen Scheibe oder Trommel trägt, auf die die Armauflage aufgelegt ist. Bei Drehung des Exzenters ändert sich die Höhenlage der Armauflage in Abhängigkeit von der Ausrichtung des Exzenters relativ zur Antriebswelle.

In einer weiteren möglichen Ausgestaltung kann vorgesehen sein, daß die Übertragungsvorrichtung einen drehangetriebenen Bügel aufweist, der mit einem gegenüber einer Drehachse abgebogenen Bügelschenkel mit der Armauflage verbunden ist. Je nach Drehstellung des Bügels ergeben sich unterschiedliche Stellungen der Armauflage. Um die auf die Armauflage einwirkenden Kräfte und Belastungen sicher aufzunehmen und abzuleiten, kann die Übertragungsvorrichtung ein selbsthemmendes Getriebe beispielsweise in Form eines Klemmfreilaufs aufweisen und/oder es kann ein selbsthemmender Motor vorgesehen sein.

Eine einfache Montage der Armlehne läßt sich erreichen, wenn der Antrieb und die Übertragungsvorrichtung mit dem Verkleidungsteil so vormontiert werden, daß die Armlehne im letzten Montageschritt lediglich auf die das Verkleidungsteil durchdringende Übertragungsvorrichtung aufgesetzt und mit dieser verbunden werden muß, was in besonders einfacher Weise beispielsweise über eine Rastverbindung erfolgen kann.

Der Benutzer eines Kraftfahrzeuges fühlt sich in diesem wohl, wenn der Fahrzeugsitz, das Lenkrad und die Armauflage eine vorbestimmte, genau auf den Benutzer und seine Bedürfnisse abgestimmte Relativlage aufweisen. Um die Armauflage nicht bei jedem Benutzerwechsel wieder neu einstellen zu müssen, kann an der Armauflage ein Positionssensor vorgesehen sein, der die aktuelle Verstellposition beispielsweise der Armauflage und/oder an deren Antrieb erfaßt und in einer Speichereinheit speichert, aus der sie vom Benutzer abgerufen werden kann, woraufhin der Antriebsmotor die Armauflage auf die gespeicherte Stellung verfährt.

Weitere Einzelheiten und Merkmale der Erfindung sind aus der folgenden Beschreibung von Ausführungsbeispielen unter Bezugnahme auf die beigefügte Zeichnung ersichtlich. Es zeigen:
- Figur 1: einen Vertikalschnitt durch eine Armauflage gemäß einer ersten Ausführungsform,
- Figur 2: einen Vertikalschnitt durch eine Armauflage gemäß einer zweiten Ausführungsform,
- Figur 3: einen Vertikalschnitt durch eine Armauflage gemäß einer dritten Ausführungsform,
- Figur 4: einen Vertikalschnitt durch eine Armauflage gemäß einer vierten Ausführungsform und
- Figur 5: ein Detail der Ausgestaltung gemäß Fig. 4 in perspektivischer Darstellung.

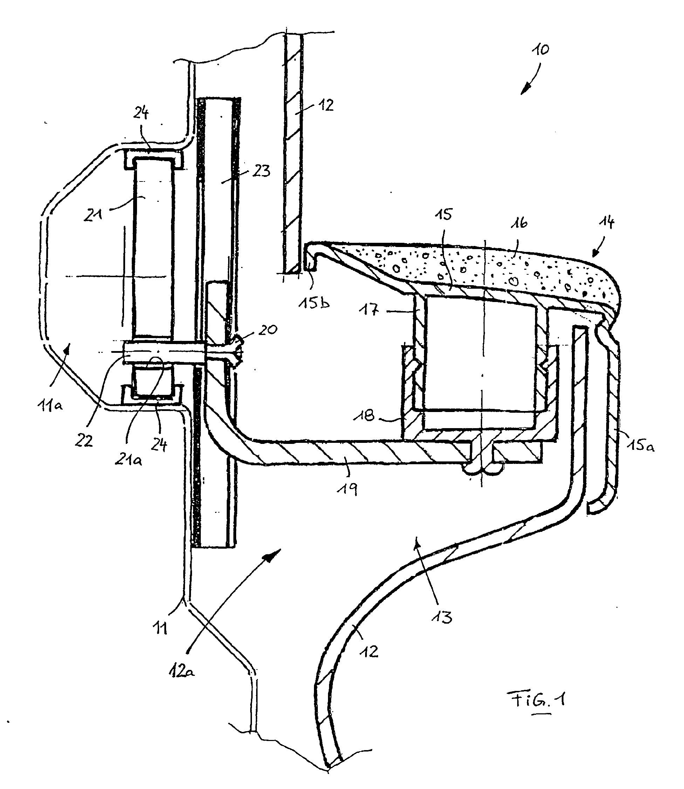

Fig. 1 zeigt einen ausschnittsweisen Vertikalschnitt durch eine Fahrzeugtür 10, die ein metallenes Blech 11 aufweist, das Teil einer nicht näher dargestellten Tragkonstruktion ist. In dem Blech 11 ist eine taschenartige Ausbuchtung 11a ausgebildet, an deren Oberseite und Unterseite jeweils sich senkrecht zur Zeichenebene und in Längsrichtung des Fahrzeuges und somit der Fahrzeugtür erstreckende Führungsschienen 24 angeordnet sind. Zwischen den Führungsschienen 24 ist ein als Flachmaterial ausgebildetes Schubteil 21 derart verschieblich gehalten, daß es mittels einer nicht näher dargestellten Antriebseinheit senkrecht zur Zeichenebene verschoben werden kann. In dem Schubteil 21 ist eine als Langloch ausgebildete Kulisse 21a vorgesehen, in die ein Stift 22 lose eingreift, der mittels eines Niets 20 fest an einem vertikalen Schenkel eines L-förmigen Tragbügels 19 angebracht ist. Der Tragbügel 19 sitzt in einer vertikalen Führungsschiene 23 und ist entlang dieser lediglich vertikal auf und ab beweglich. Wenn das Schubteil 21 verschoben wird, folgt der Stift 22 der Kulisse 21a und wird durch diese entsprechend dem Kulissenverlauf nach oben oder nach unten bewegt, woraus eine entsprechende Auf- oder Abwärtsbewegung des Tragbügels 19 resultiert.

Auf der dem Fahrzeuginnenraum zugewandten Seite der Fahrzeugtür 10 ist ein Verkleidungsteil 12 angeordnet, das eine Öffnung 12a aufweist, nahe der eine nach innen zum Fahrzeuginnenraum vorstehende, nach oben offene Tasche 13 gebildet ist, in die der Tragbügel 19 durch die Öffnung 12a hindurch hineinragt. Am vorderen Ende des Tragbügels 19 ist eine nach oben offene Lagerhülse 18 montiert, in die ein stutzenförmiger Ansatz 17 eines Tragteils 15 einer Armauflage 14 fest eingesetzt ist. Das Tragteil 14 überdeckt die offene Oberseite der Tasche 13 und weist an seinem zum Fahrzeuginnenraum weisenden Ende einen sich nach unten erstreckenden Abdeckschenkel 15a auf, der die Außenseite des nach innen ragenden Abschnitts der Tasche 13 überdeckt. Auf seiner Oberseite ist das Tragteil 15 mit einer Polsterung 16 versehen. Die der Fahrzeugtür zugewandte Längskante 15b des Tragteils 15 liegt in unmittelbarer Nähe der Oberfläche des Verkleidungsteils 12. Wenn ein Benutzer das Schubteil 21 verstellt, wird die Kulisse 21a relativ zu dem Stift 22 verschoben und zwängt diesen in eine Aufwärts- oder Abwärtsbewegung, die durch die vertikale Führungsschiene 23 bestimmt ist. Dies führt zu einer entsprechenden Bewegung des Tragbügels 19 und der damit fest verbundenen Armauflage 14, wobei die Längskante 15b des Tragteils 15 entlang der Oberfläche des Verkleidungsteils 12 verstellt wird und der Abdeckschenkel 15a in jeder Position der Armauflage 14 den die Tasche 13 bildenden Abschnitt des Verkleidungsteils 12 übergreift, so daß das Auftreten von sichtbaren Spalten vermieden ist.

Die Armauflage 14 ist in ihrer Längsrichtung, d.h. senkrecht zur Zeichenebene gemäß Fig. 1 durch zwei auf Abstand angeordnete gleichartige Tragbügel 19 abgestützt, von denen in Fig. 1 nur einer sichtbar ist. Der andere Tragbügel weist eine gleichartige Konstruktion mit einem entsprechenden Stift auf, der in eine Kulisse des gleichen Schubteils 21 eingreift, wodurch die beiden Tragbügel synchron angehoben und abgesenkt werden, so daß die Armauflage 14 mit ihrer Oberseite in jeder Stellung im wesentlichen horizontal gehalten werden kann.

Wie Fig. 1 zeigt, ist der stutzenförmige Ansatz 17 des Tragteils 15 in der nach oben offenen Lagerhülse 18 verrastet. Dies bringt den wesentlichen Montagevorteil mit sich, daß die Armauflage 14 als letztes Bauteil bei der Montage der Tür von oben auf die Tasche 13 aufgesetzt und durch die genannte Rastverbindung befestigt werden kann.

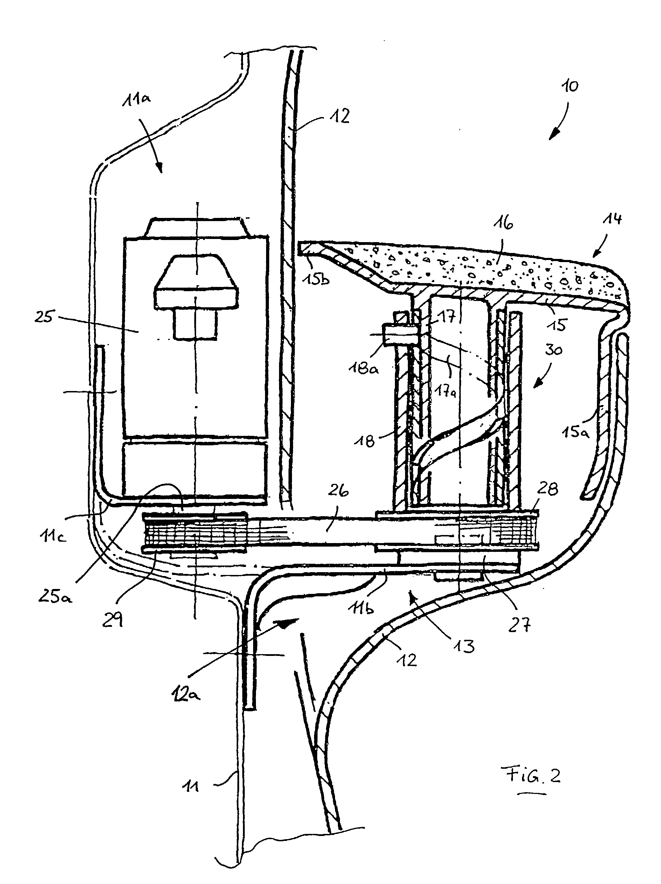

Fig. 2 zeigt eine alternative Ausgestaltung der verstellbaren Armauflage 14, wobei in der taschenartigen Ausbuchtung 11a des Bleches 11 ein Elektromotor 25 über einen Haltebügel 11c gelagert ist. Auf der Ausgangswelle 25a des Elektromotors 25 sitzt eine Riemenscheibe 29, über die ein Transmissionsriemen 26 verläuft. Der Transmissionsriemen 26 durchgreift das Verkleidungsteil 12 an einer Öffnung 12a und verläuft des Weiteren über eine Riemenscheibe 28, die mittels eines am Blech 11 angeschlossenen Haltebügels 11b in der vom Verkleidungsteil 12 gebildeten innenseitigen Tasche 13 auf einem Lager 27 drehbar gehalten ist. Auf der Riemenscheibe 28 ist eine Lagerhülse 18 befestigt, die koaxial zur Riemenscheibe 28 angeordnet ist und zusammen mit dieser dreht. In die Lagerhülse 18 greift von oben ein Ansatz 17 des Tragteils 15 der Armauflage 14 ein. Auf der Außenoberfläche des Ansatzes 17 ist eine spiralförmige Nut 17a ausgebildet, in die ein an der Lagerhülse 18 fest montierter radialer Stift 18a eingreift, so daß ein Spindeltrieb 30 gebildet ist. Bei Aktivierung des Elektromotors 25 wird die Riemenscheibe 29 gedreht, deren Drehbewegung über den Transmissionsriemen 26 auf die Riemenscheibe 28 übertragen wird. Zusammen mit der Riemenscheibe 28 dreht die Lagerhülse 18 mit dem Stift 18a. Da der Ansatz 17 des Tragteils 15 drehfest gehalten ist, bewirkt der Eingriff des Stiftes 18a in die Spiralnut 17a je nach Drehrichtung der Lagerhülse 18 eine aufwärts- oder abwärtsgerichtete Bewegung des Ansatzes 17 und somit der Armauflage 14. Auch bei der Ausgestaltung gemäß Fig. 2 ist die Armauflage 14 über zwei senkrecht zur Zeichenebene auf Abstand hintereinander angeordnete Spindeltriebe 30 gleichartigen Aufbaus abgestützt, wobei die Riemenscheiben der Spindeltriebe von dem gleichen Transmissionsriemen 26 umschlungen sind, so daß die Antriebsbewegungen der Spindeltriebe 30 synchronisiert sind.

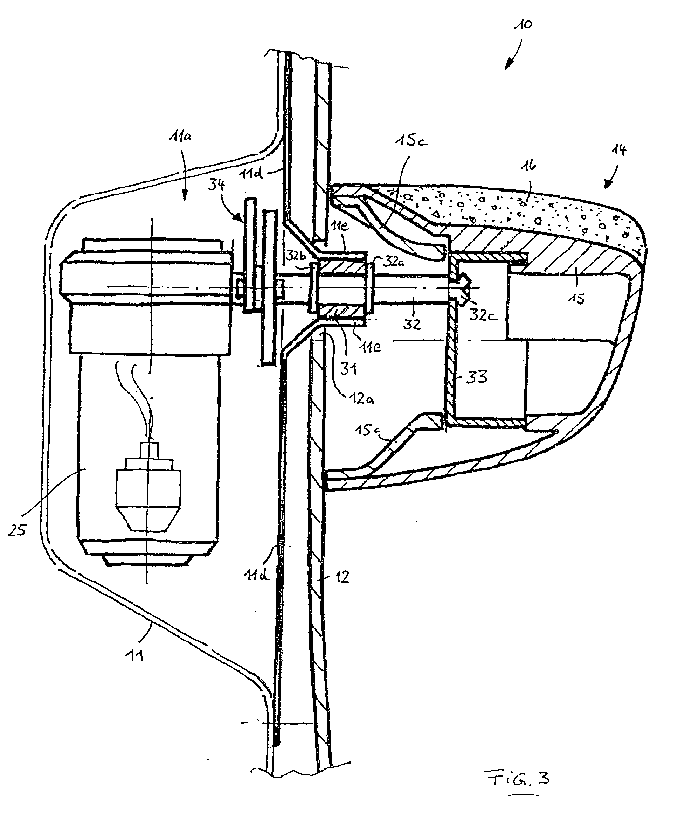

Fig. 3 zeigt eine weitere mögliche Ausgestaltung der verstellbaren Armauflage, wobei in der taschenartigen Ausbuchtung 11a des Bleches 11 wiederum ein Elektromotor 25 angeordnet ist. An das Blech 11 ist ein Tragblech 11d angeschlossen, das einen buchsenartigen Auflagerbereich 11e bildet, der durch eine Öffnung 12a des Verkleidungsteils 12 hindurchragt. Der buchsenartige Auflagerbereich 11e trägt eine Lagerbuchse 31, in der eine Ausgangswelle 32 des Elektromotors 25 drehbar gelagert ist. Durch auf der Ausgangswelle 32 sitzende Kragen 32a und 32b ist eine Axialvertellung der Ausgangswelle 32 relativ zu der Lagerbuchse 31 verhindert.

Am freien Ende der Ausgangswelle 32 ist über einen Niet 32c ein Exzenter 33 in Form einer kreiszylindrischen Trommel befestigt. Auf den Exzenter 33 ist das Tragteil 15 der Armauflage 14 aufgelegt, wobei das Tragteil 15 einen im wesentlichen U-förmigen Querschnitt besitzt, dessen offene Seite der Oberfläche des Verkleidungsteils 12 zugewandt ist. Innere Federlaschen 15c des Tragteils 15 verhindern, daß das Tragteil 15 von dem Exzenter 33 abgezogen werden kann, obwohl es nur lose auf diesem aufliegt. Wenn der Elektromotor 25 aktiviert wird, führt dies zu einer Drehung der Ausgangswelle 32 und somit einer Drehung des Exzenters 33, der dabei an dem auf ihm aufliegenden Tragteil 15 entlangschleift und dieses aufgrund seiner Exzentrizität je nach Ausrichtung des Exzenters anhebt oder absenkt.

Die Armauflage gemäß Fig. 3 ist über zwei in ihrer Längserstreckung, d.h. senkrecht zur Zeichenebene, beabstandete Exzenter 33 abgestützt. Diese werden von dem gleichen Elektromotor 25 verstellt, wobei die Bewegung der Ausgangswelle 32 über ein Getriebe 34 abgenommen und auf eine parallel zur Ausgangswelle 32 verlaufende, nicht dargestellte Welle für den zweiten Exzenter übertragen wird, wobei die Drehbewegungen der Exzenter miteinander synchronisiert sind.

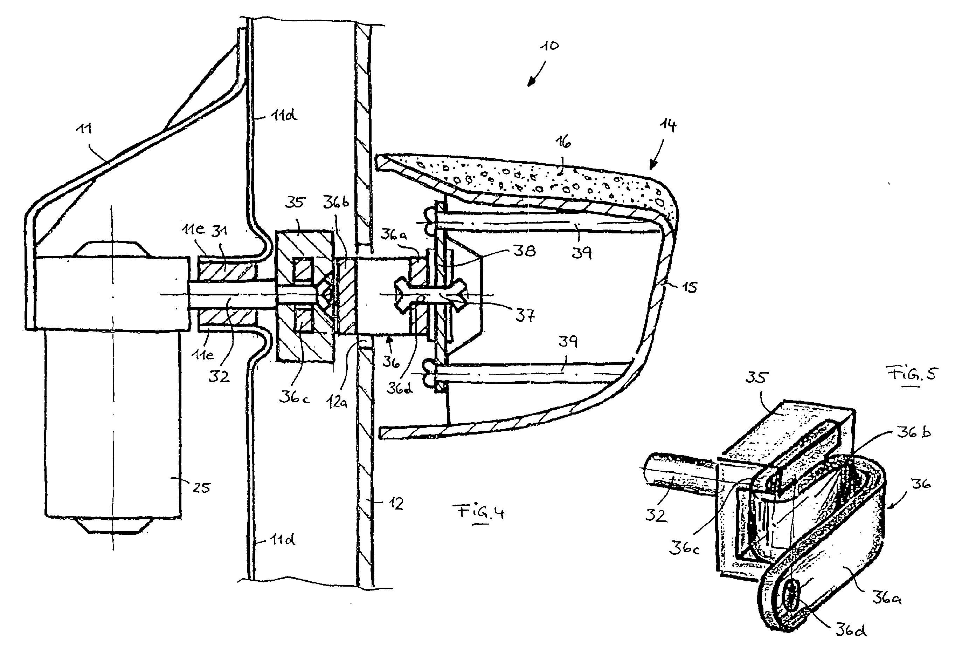

Gemäß der in den Fig. 4 und 5 dargestellten Ausführungsform ist an dem Blech 11 der Elektromotor 25 gehalten, der mit seiner Ausgangswelle 32 in der Auflagerbereich 31 drehbar gelagert ist, die in dem buchsenartigen Auflagerbereich 11e des Tragblechs 11d sitzt. An ihrem vorderen Ende trägt die Ausgangswelle 32 einen Lagerblock 35, in dem ein endseitiger Schenkel 36c eines S-förmig gebogenen Bügels 36 eingesetzt ist, wie es in Fig. 5 im Detail dargestellt ist. Der Schenkel 36c sitzt drehfest innerhalb des Lagerblocks 35 und ist über einen mittleren Stegabschnitt 36b mit einem anderen endseitigen Schenkel 36a des Bügels 36 verbunden, der das Verkleidungsteil 12 an einer Öffnung 12a durchgreift und sich im wesentlichen senkrecht zur Antriebswelle 32 erstreckt. An seinem äußeren vorderen Ende ist in dem Schenkel 36a eine Bohrung 36d ausgebildet, die im wesentlichen parallel, jedoch versetzt zur Antriebswelle 32 verläuft. Wie Fig. 4 zeigt, besitzt die Armauflage 14 ein Tragteil 15 mit einem U-förmigen, zum Verkleidungsteil 12 hin öffnenden Querschnitt. Im Inneren des Tragteils 15 ist über Lagerstäbe 39 eine Lagerplatte 38 gehalten, die sich im wesentlichen vertikal erstreckt und über einen Niet 37, der in die Bohrung 36d eingreift, an dem Bügel 36 schwenkbar befestigt. Wenn der Elektromotor 25 aktiviert wird, führt dies zu einer Drehung der Ausgangswelle 32, wodurch der Lagerblock 35 und mit ihm der Bügel 36 schwenkt. Mit dem Bügel 36 schwenkt auch der im Versatz zur Ausgangswelle 32 angeordnete Niet 37, wodurch die Lagerplatte 38 und mit ihr die Armauflage 14 angehoben bzw. abgesenkt werden.

## Patentansprüche

1. Fahrzeugtür mit einer Tragkonstruktion (11), die auf der dem Fahrzeuginnenraum zugewandten Seite zumindest ein Verkleidungsteil (12) mit einer zumindest in der Höhenlage längs einer Führung verstellbaren Armauflage (14) trägt, **gekennzeichnet durch** einen innerhalb der Fahrzeugtür angeordneten Antrieb (25), dessen Antriebsbewegung mittels einer Übertragungsvorrichtung, die das Verkleidungsteil (12) an zumindest einer Öffnung (12a) durchdringt, als Verstellbewegung auf die Armauflage (14) übertragbar ist, wobei die Öffnung (12a) in jeder Stellung der Armauflage (14) überdeckt ist.

2. Fahrzeugtür nach Anspruch 1, **dadurch gekennzeichnet, daß** die Armauflage (14) in ihrer Positionierung in Längsrichtung der Fahrzeugtür verstellbar ist.

3. Fahrzeugtür nach Anspruch 1 oder 2, **dadurch gekennzeichnet, daß** die Führung (21,23,24) innerhalb der Fahrzeugtür angeordnet ist.

4. Fahrzeugtür nach Anspruch 3, **dadurch gekennzeichnet, daß** die Übertragungsvorrichtung in zumindest zwei in Längsrichtung der Armauflage (14) beabstandeten Bereichen an dieser angreift.

5. Fahrzeugtür nach einem der Ansprüche 1 bis 4, **dadurch gekennzeichnet, daß** der Antrieb in einem der Armauflage (14) weitestmöglich entfernten Abschnitt der Fahrzeugtür angeordnet ist.

6. Fahrzeugtür nach einem der Ansprüche 1 bis 5, **dadurch gekennzeichnet, daß** die Übertragungsvorrichtung zumindest eine flexible Welle umfaßt.

7. Fahrzeugtür nach einem der Ansprüche 1 bis 6, **dadurch gekennzeichnet, daß** die Armauflage (14) auf die das Verkleidungsteil (12) durchdringende Übertragungsvorrichtung aufsetzbar ist.

8. Fahrzeugtür nach einem der Ansprüche 1 bis 7, **dadurch gekennzeichnet, daß** die Übertragungsvorrichtung eine Kulissenführung (21,21a,22) aufweist.

9. Fahrzeugtür nach einem der Ansprüche 1 bis 7, **dadurch gekennzeichnet, daß** die Übertragungsvorrichtung einen Transmissionsriemen (26) aufweist, über den zumindest zwei Spindeltriebe (17,18) synchronisiert antreibbar sind.

10. Fahrzeugtür nach einem der Ansprüche 1 bis 7, **dadurch gekennzeichnet, daß** die Übertragungsvorrichtung einen drehangetriebenen Exzenter (33) aufweist, auf den die Armauflage (14) aufgelagert ist.

11. Fahrzeugtür nach einem der Ansprüche 1 bis 7, **dadurch gekennzeichnet, daß** die Übertragungsvorrichtung einen drehangetriebenen Bügel (36) aufweist, der mit einem gegenüber einer Drehachse abgebogenen Bügelschenkel (36a) mit der Armauflage (14) verbunden ist.
